# EUROPEAN PATENT APPLICATION

(11) **EP 1 858 197 A1**
(43) Date of publication of application: **21.11.2007**
(21) Application number: 06010036.9
(22) Date of filing: 16.05.2006
(51) Int. Cl.: H04L 12/24, H04L 29/12, H04L 12/28, H04L 12/56

(54) **Associating dynamic IP-addresses to network topology**

(71) Applicant: NOKIA SIEMENS NETWORKS GMBH & CO. KG, 81541 München (DE)
(72) Inventor: Pereira, Goncalo, PT-Amadora (PT)
(74) Representative: Fischer, Michael

(57) **Abstract**

A method and a system for associating dynamic IP-addresses to network topology in a network, comprising:
- by at least one customer device (CPE1, CPEa, CPEc) connected to a corresponding access device (DSLAMa, DSLAMc), requesting a dynamic IP-address to the DHCP relay agent (DHA, DHA1, DHA2) located within the corresponding access device (DSLAMa, DSLAMc);
- by the DHCP relay agent (DHA, DHA1, DHA2), notifying the requesting customer device (CPE1, CPEa, CPEc) about its newly assigned dynamic IP-address received by the DHCP server (DHS, DHS1, DHS2) associated to the DHCP relay agent (DHA, DHA1, DHA2);
- by one of the DHCP nodes (DHA, DHA1, DHS, DHS2), notifying the bandwidth controller (BWC, BWC1, BWC2) about the assigned dynamic IP-address of the requesting customer device (CPE1, CPEa, CPEc) and about the identifier of the corresponding access device (DSLAMa, DSLAMc) connected to the requesting customer device (CPE1, CPEa, CPEc) together with the access device uplink port.

## Description

The present invention relates to a method according to the preamble of claim 1 and a system according the preamble of claim 5.

In recent years, the fast growing of packet based telecommunication networks and the large amount of services over such networks have led to a remarkable growth in traffic. Users, within a packet based telecommunication network, often share a variety of network resources. In order to properly manage the traffic over shared network resources by providing a certain quality of service to the users, a variety of emerging types of management applications have been provided. Examples of these emerging management applications are admission control applications for controlling the sharing of network resources. Typically, examples of services requested by customer devices or Customer Premise Equipment (CPEs) may include VoIP calls, VoD services or any other type of multimedia services. Examples of application servers may include softswitches, video servers or any other type of multimedia application servers.

In admission control applications, upon receiving by the CPE a service request for the creation of a new service instance, the application server contacts a bandwidth controller for requesting bandwidth. Generally, when requesting a given bandwidth from the bandwidth controller, the application server is providing the bandwidth controller with the identifiers of the service end-points. End points include an originating end-point, e.g. a customer device, and a terminating end-point, e.g. another customer device, a router or any other type of terminating end-point. Identifiers of originating and terminating end-points are typically IP-addresses.

Such management applications, as admission control applications, require, for their operations, information on the association between the IP-addresses assigned to customer devices and the underlying network topology.

In network environments where IP-addresses are statically assigned to customer devices, the bandwidth controller holds typically the information on the coupling between the customer device IP-addresses and the network topology of such customer devices.

Thus, with static address assignment, the bandwidth controller holds the required information on the network topology to find the actual path of traffic through the network for the customer service, so that bandwidth usage can be updated and a decision whether to admit or not a new service request can be properly taken.

However, for a variety of reasons, most of today's applications in packet based networks rely on the dynamic assignment of IP addresses. In fact, often, in packet networks, IP-addresses are assigned to customer devices in a dynamic way whenever they register in the network.

At this purpose, for dynamically assigning IP-addresses to hosts, DHCP protocol has been introduced. Generally, in DHCP protocol, a host is notified about its assigned dynamic IP-address by a DHCP node. Typically, customer devices receive a dynamic IP addresses from a DHCP relay agent located within their corresponding access device. The decision of the dynamic IP-address to be assigned to a given host is taken by a DHCP server located at the edge between the core and the networks and which informs its associated DHCP relay agent, located within the access device associated to the customer device and which in turn notifies the customer device.

Unfortunately, as above explained, when customer devices are assigned with IP-addresses in a dynamic way, e.g. via DCHP protocol, the bandwidth controller has not anymore the information on the association between the assigned customer devices IP-addresses and the corresponding network topology. In fact, a service request from the customer device to its corresponding application server does not typically include any information on the network topology of the customer device even if it typically includes information on the newly assigned customer device IP-address.

Thus, as a consequence of dynamic address assignment via DHCP, since the application server has no information on the association between devices dynamic IP-addresses and the corresponding network topology, also the bandwidth controller, when it receives a service bandwidth request from the application server, has no information on such association between dynamic IP-addresses and their underlying network topology.

Hence, a major drawback of using DHCP protocol for dynamically assigning IP-addresses to customer devices is that some emerging types of management applications, such as admission control applications, which require tight coupling between IP addresses and network topology, cannot be supported.

On the other hand, DHCP dynamic address assignment is widely used in packet networks and methods and systems which provide tight coupling between the dynamically assigned IP-address and the underlying network topology network are a necessity in today's IP networks. In fact, for example, triple play" services (data, voice and video) are provided on networks which typically rely on dynamic IP-addresses assignment.

A method for providing coupling between the dynamically assigned IP-address and the underlying network topology network is disclosed in Document US 20020138854.

The above cited document proposes a method for associating device dynamic IP-addresses to their underlying network topology, by making an association between user devices and access nodes, by having the access nodes to insert control bits in the packets that are sent from the access devices and that are in turn intended to be forwarded to a media server. The media server uses the provenience of the packets together with the control information inserted in the packet to make the association between the user devices and the end access nodes. Thus, according to the disclosure of the above cited document, one of involved parties is required to add information to the packet, which follows the regular data flow, and another party, e.g. the media server, which is responsible for keeping the topology association, is required to interpret each packet in order to deduce the topology information.

Unfortunately, this method requires a device that is capable of intercept some packets and of adding additional information to them and this method also requires an additional device capable of performing a special processing on some types of packets for retrieving network topology information.

The drawback of this method is that it is complex and expensive to implement.

It is therefore aim of the present invention to overcome the above mentioned drawbacks, in particular by providing a method and a system which provide tight coupling between the dynamically assigned IP-address and the underlying network topology network in a simple and cost-effective way.

The aforementioned aim is achieved by a method and a system for associating dynamic IP-addresses to network topology in a network, the network comprising:
- a plurality of customer devices, each one having a dynamic IP-address assigned via DHCP protocol;
- a plurality of access devices connected to the plurality of customer devices and located in an access part of the network;
- at least one edge device connecting the access network to a core part of the network;
- at least two DHCP nodes for assigning dynamic IP-addresses to the plurality of customer devices, the DHCP nodes having the functionality of a DHCP relay agent located in at least one of the plurality of access devices and the functionality of a DHCP server (DHS, DHS1, DHS2) associated to the DHCP relay agent and located in the edge device;
- at least one bandwidth controller for controlling bandwidth assigned to services requested by the plurality of customer devices; the invention comprising:
   a) by at least one of the customer devices connected to a corresponding access device, requesting a dynamic IP-address to the DHCP relay agent located within the corresponding access device;
   b) by the DHCP relay agent, notifying the requesting customer device about its newly assigned dynamic IP-address received by the DHCP server associated to the DHCP relay agent; and
   c) by one of the DHCP nodes, notifying the bandwidth controller about the assigned dynamic IP-address of the requesting customer device and about the identifier of the corresponding access device connected to the requesting customer device together with the access device uplink port.

Further advantageous embodiments of the present invention are given below (each alone or in any possible combination:
- by a network management.platform, notifying the bandwidth controller about topology updates of the path between the access devices and the corresponding edge device (ER, ER1, ER2).
- by the bandwidth controller (BWC, BWC1, BWC2), storing the information received in step c) and/or in step e) in a path table located within its memory.
- the requested services may advantageously be requested by the plurality of customer devices to their corresponding application server.

The proposed invention allows the bandwidth controller to trace the actual traffic path from the edge device, interfacing the core and the access networks, until the customer access device so that admission control can be implemented.

The proposed invention is cost effective and it has less impact on performance since the sending of notifications is performed only upon requirement, and not in a continuous way, on every packet, as in the prior art.

The proposed invention allows the use of admission control in multimedia services in which customer devices IP-addresses are dynamically assigned via DHCP protocol, Thus, by providing multimedia services, e.g. triple-play services, service providers may increase the revenues while also being able to ensure, through admission control, network optimization, quality of service and customer satisfaction.

The invention will now be described in preferred but not exclusive embodiments with reference to the accompanying drawings, wherein:
- Figure 1: depicts a block diagram which schematically illustrates the case of DHCP relay agent notification in an example embodiment according to the present invention;
- Figure 2: depicts a block diagram which schematically illustrates the case of DHCP server notification in a further example embodiment according to the present invention.

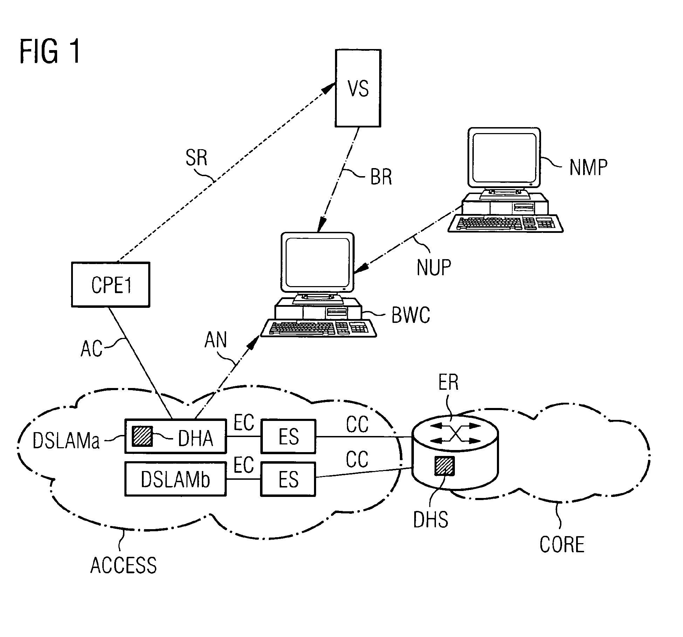

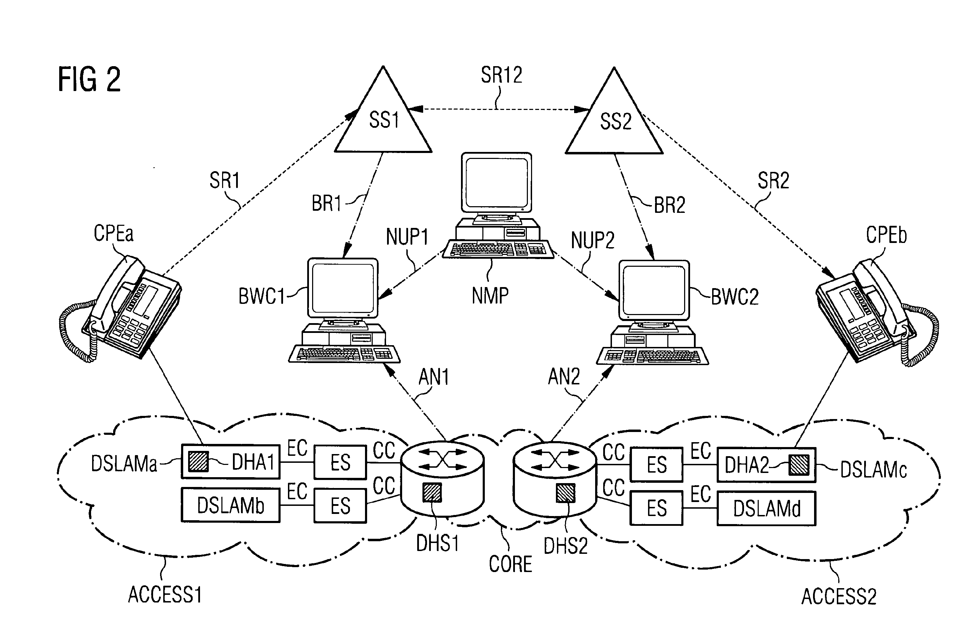

In Figures 1 and 2, the dashed and dotted-dashed arrows AN, AN2, BR, BR1, NUP, NUP2, SR, SR1 represent logical connections over which network messages are exchanged, while the continuous lines AC, EC, CC represent physical network connections.

In Figure 1, it is shown the case of DHCP relay-agent notification, in example embodiment according to the present invention. Figure 1 shows an example of network scenario for VoD services.

A customer device CPE1 requests a service, e.g. a VoD service, from an application server AS, e.g. a video server, by sending a message SR, e.g. Req(VoD service), to the video server AS.

The customer, device CPE1 may include, for example, an xDSI. modem, an xDSL router, a set-top box and a telephone. The skilled in the art easily understands that the customer device CPE1 may include a large variety of devices depending on the type of access connection AC, on the type of customer access device DSLAMa and on the types of services and of applications available at the customer site.

Example of the access connection AC may be a copper line allowing dedicated broadband lines such as xDSL and ISDN or it may be a fiber line. Examples of communication protocols used over the access connection AC may be xDSL protocols or Ethernet over fiber protocols.

The customer access device DSLAMa, DSLAMb may be a DSLAM or any other type of broadband access equipment communicating with the customer devices CPE1.

The customer device CPE1 is connected via access connection AC to the customer access device DSLAMa located in the access network.

The access network comprises a plurality of customer access devices DSLAMa, DSLAMb connectable to a plurality of customer devices CPE1, The customer access devices DSLAMa, DSLAMb may be connected to Ethernet switches ES via Ethernet connections EC. The Ethernet switches ES are connected to edge device ER. via edge connections CC. An example of edge device ER may be an edge router, a BRAS or any other device connecting the core network, denoted by CORE, to the access network, denoted by ACCESS. Examples of communication protocols used in edge connections CC are Ethernet or IP protocols.

The edge router ER comprises a DHCP node DS, having the functionality of a DHCP server, for assigning dynamic IP-addresses to customer devices CPE1 requesting a dynamic IP-address to a closer DHCP node DHA, having a functionality of a DHCP rely-agent, located at the customer access device DSLAMa.

In order to ensure bandwidth assignment for the customer service request, the video server AS, upon receiving the customer service request message SR, asks for bandwidth assignment to a bandwidth controller BWC that performs bandwidth management. Bandwidth assignment is requested by the application server AS by sending a bandwidth request message BR, e.g. Req (Customer IP address, Edge Router IP address), in which the dynamic customer device IP-address and the edge router IP-address are notified to the bandwidth controller BWC.

The customer device CPE1, each time it establishes a new session with its access network ACCESS, it requests to the DHCP relay agent DHA of its associated customer access device DSLAMa a dynamic IP- address. The DHCP relay agent DHA, after having obtained an assigned dynamic IP-address from the DHCP server DHS located at the edge router ER, it informs the customer device CPE1 about its newly assigned IP-address. According to an example embodiment of the present invention, the DHCP relay-agent DHA, at every new assignment of a dynamic IP-address to the customer device CPE1, it notifies the bandwidth controller BWC about the IP-address assignment by sending an assignment notification message AN. In a further embodiment of the present invention, the assignment notification message is sent periodically, or upon request, to the bandwidth controller BWC. The assignment notification message AN contains the customer device IP-address and the identifier of the customer access device DSLAMa with its uplink port e.g. Notif(Customer IP-address, DSLAM & port identifier) .

Upon receiving the assignment notification message AN from the DHCP relay agent DHA, the bandwidth controller BWC stores the received information in its memory. The stored information may be included in a path table. The IP-address of the requesting application server AS may also be stored in the path table of the bandwidth controller BWC.
The path table contains information on the dynamic IP-address of customer device CPE1, the IP-address of the edge router ER, the identifier of customer access device DSLAMa with its uplink port, the path between the customer access device DSLAMa and the edge router ER.

Since, the bandwidth controller BWC typically reserves bandwidth resources until the uplink port of the customer access device DSLAMa, the association to the customer port does not have to be stored in the path table.

Table 1 shows, for the network scenario of Figure 1, an example of the information stored in the bandwidth controller BWC, received through the assignment notification messages AN of the DHCP relay agent DHA.

**Table 1:**

| | |
|---|---|
| **Identifier of DSLAM with its uplink port** | **IP address of customer device** |
| | |
| Identifier of DSLAMa with its uplink port | IP address of customer device CPE1 |
| | |
| Identifier of DSLAMa with its uplink port | IP address of customer device CPE2 (not shown) |
| | |
| Identifier of DSLAMb with its uplink port | IP address of customer device CPE3 (not shown) |

The actual path between the customer access device DSLAMa and edge router ER is retrieved by the bandwidth controller from a network management platform NMP, typically located at the telecom premises equipment. The network management platform NMP notifies the bandwidth controller BWC with the topology updates of the physical active path between the customer access device DSLAMa and the edge router ER, by sending Notif(Topology Update) message NUP10.

Figure 2 shows a block diagram which schematically illustrates the case of DHCP server notification in a further example network embodiment according to the present invention.

Figure 2 is an example of network scenario for VoIP call service, spanning through two different access networks ACCESS1, ACCESS2, each one with its own bandwidth controller BWC1, BWC2.
An originating customer device CPEa, e.g. a VoIP phone, connected to the first access network ACCESS1, makes a VoIP call directed to a terminating customer device CPEc, e.g. a VoIP phone, connected to the second access network ACCESS2.

The originating VoIP phone CPEa requests a service, e.g. a VoIP call directed to the terminating VoIP phone CPEc, from a first application server SS1, e.g. a softswitch, by sending a message SR1, e.g. Req(VoIP service), directed to the softswitch SS1. The softswitch SS1 exchanges signaling messages SR12, via SIP protocol, with a second softswitch SS2 which in turn sends a VoIP service request message SR2, e.g. Req(VoIP service), directed to the terminating VoIP phone CPEc.

The first access network ACCESS1 comprises a plurality of customer access devices DSLAMa, DSLAMb, connectable to a plurality of customer devices CPEa. The second access network ACCESS2 comprises a plurality of customer access devices DSLAMc, DSLAMd, connectable to a plurality of customer devices CPEc.

The customer access devices DSLAMa, DSLAMb, DSLAMc, DSLAMd of the first and the second access networks are connected to core access devices ES,

A first and a second access core devices ER1, ER2 comprise, each one, a DHCP server DHS1, DHS2 for assigning dynamic IP-addresses customer devices CPEa, CPEc through DHCP relay-agents DHA1, DHA2 located in the access networks ACCESS1, ACCESS2.

In order to provide bandwidth assignment for the customer service request, the first softswitch SS1, upon receiving the customer service request message SR1, asks for bandwidth assignment to its bandwidth controller BWC1.
Similarly, in order to provide bandwidth assignment for the VoIP service request directed to the second VoIP phone CPEc, the additional softswitch SS2, upon receiving the VoIP service request message SR2, asks for bandwidth assignment to its bandwidth controller BWC2.

Bandwidth assignment is requested by the softswitches SS1, SS2 by sending a bandwidth request message BR1, BR2 e.g. Req(Customer IP address, Edge Router IP address), in which the dynamic customer device IP-address and edge router IP address are notified to each of the bandwidth controllers BWC1, BWC2.

The customer devices CPEa, CPEc each time they establish a new session with their access networks ACCESS1, ACCESS2, they request to the DHCP relay-agents DHA1, DHA2 located within their access devices ER1, ER2 a dynamic IP-address. The DHCP-relay agent DHA1, DHA2, after having obtained an assigned dynamic IP-address from the DHCP server DHS1, DHS2 located at the edge router ER1, ER2, it informs the VoIP phone CPEa, CPEc about its newly assigned dynamic IP-address.
The DHCP server DHS1, DHS2 of the edge routers ER1, ER2, according to a further example embodiment of the present invention, at every new assignment of a dynamic IP-address to the customer devices CPEa, CPEc, notifies to its own bandwidth controller BWC1, BWC2 about the dynamic IP-address assignment, by sending an assignment notification message AN1, AN2. The assignment notification message AN1, AN2 contains the customer device IP-address and the identifier of the customer access device DSLAMa, DSLAMc with its uplink port e.g. Notif(Customer IP-address, DSLAM & port identifier) .

Similarly as in the example case of Figure 1, upon receiving the assignment notification message AN1, AN2 from the DHCP server DHS1, DHS2 the bandwidth controller BWC1, BW2 stores the received information in its memory. The stored information may be included in a path table. The IP-address of the requesting softswitch SS1, SS2 may also be stored in the path table of the bandwidth controller BWC1, BWC2.
The path table contains information on the dynamic -IP address of customer device CPEa, CPEc, the IP-address of the softswitches SS1, SS2, the identifier of customer access device DSLAMa, DSLAMc with its uplink port, and the path between the access device DSLAMa, DSLAMc and edge device ER1, ER2.

Each bandwidth controller BWC1, BWC2 stores a different table, e.g. Table 2 and Table 3, with the access devices DSLAMa, DSLAMb, DSLAMc, DSLAMd and customer identifiers CPEa, CPEc for which it does the admissions control calculations.

Table 2 shows, for the network scenario of Figure 2, an example of the information stored in the first bandwidth controller BWC1, received through the assignment notification messages AN1 of the first DHCP server DHS1.

**Table 2:**

| | |
|---|---|
| **Identifier of DSLAM with its uplink port** | **IP address of customer device** |
| | |
| Identifier of DSLAMa with its uplink port | IP address of customer device CPEa |
| | |
| Identifier of DSLAMa with its uplink port | IP address of customer device CPEa1 (not shown) |
| | |
| Identifier of DSLAMb with its uplink port | IP address of customer device CPEb (not shown) |

Table 3 shows, for the network scenario of Figure 2, an example of the information stored in the second bandwidth controller BWC2, received through the assignment notification messages AN2 of the first DHCP server DHS2.

**Table 3:**

| | |
|---|---|
| **Identifier of DSLAM with its uplink port** | **IP address of customer device** |
| | |
| Identifier of DSLAMa with its uplink port | IP address of customer device CPEa |
| | |
| Identifier of DSLAMa with its uplink port | IP address of customer device CPEa1 (not shown) |
| | |
| Identifier of DSLAMb with its uplink port | IP address of customer device CPEb (not shown) |

The actual path between the customer access device DSLAMa, DSLAMb, DSLAMc, DSLAMd and the edge router ER1, ER2 is retrieved by the bandwidth controller from the network management platform NMP. The network management platform NMP notifies the bandwidth controller BWC1, BWC2 with the topology updates of the physical active path between the customer access device DSLAMa, DSLAMb, DSLAMc, DSLAMd and the edge router ER1, ER2 by sending Notif(Topology Update) message NUP1, NUP2.

| **List of reference signs** | |
|---|---|
| AC | access connection |
| AN, AN1, AN2 | Notif (Customer IP-address, DSLAM & port identifier) |
| ACCESS, ACCESS1, ACESS2 AS | access network application server, video server |
| BR, BR1, BR2 | Req(Customer IP-address, Edge Router TP-addxess) |
| BWC, BWC1, BWC2 | bandwidth controller |
| CC | edge connection |
| CORE | core network |
| CPE1 | customer device |
| CPEa, CPEC | customer device, VoIP phone |
| DHA, DHA1, DHA2 | DHCP node, DHCP relay-agent |
| DHS, DHS1, DHS2 | DHCP node, DHCP server |
| DSLAMa, DSLAMb, DSLAMc, DSLAMd | customer access device, access device, DSLAM |
| EC | Ethernet connection |
| ER, ER1, ER2 | edge device, edge router |
| NMP | Network Management Platform |
| NUP, NUP1, NUP2 | Notif(Topology Update) |
| SR | Req(VoD service) |
| SR1, SR2 | Req(VoIP service) |
| SR12 | signaling message |
| SS1, SS2 | application server, softswitch |

| **List of acronyms** | |
|---|---|
| BRAS | Broadband Remote Access Server |
| CPE | Customer Premises Equipment |
| DHCP | Dynamic Host Configuration Protocol |
| IP | Internet Protocol |
| SIP | Session Initiation Protocol |
| VoD | Video on Demand |
| VoIP | voice over IP |

## Claims

1. A method for associating dynamic IP-addresses to network topology in a network, said network comprising:
- a plurality of customer devices (CPE1, CPEa, CPEc), each one having a dynamic IP-address assigned via Dynamic Host Configuration Protocol, herein after referred as DHCP;
- a plurality of access devices (DSLAMa, DSLAMb, DSLAMc, DSLAMd) connected to said plurality of customer devices (CPE1, CPEa, CPEb) and located in an access part (ACCESS) of said network;
- at least one edge device (ER, ER1, ER2) connecting said access network (ACESS) to a core part (CORE) of said network;
- at least two DHCP nodes (DHA, DHA1, DHS, DHS2) for assigning dynamic IP-addresses to the plurality of customer devices (CPE1, CPEa, CPEc), said DHCP nodes (DHA, DHA1, DHS, DHS2) having the functionality of a DHCP relay agent (DHA, DHA1, DHA2) located in at least one of the plurality of access devices (DSLAMa, DSLAMb, DSLAMc, DSLAMd) and the functionality of a DHCP server (DHS, DHS1, DHS2) associated to the DHCP relay agent (DHA, DHA1, DHA2) and located in the edge device (ER, ER1, ER2);
- at least one bandwidth controller (BWC, BWC1, BWC2) for controlling bandwidth assigned to services requested by the plurality of customer devices (CPE1, CPEa, CPEc);
said method comprising the steps of:
a) by at least one of the customer devices (CPE1, CPEa, CPEc) connected to a corresponding access device (DSLAMa, DSLAMc), requesting a dynamic IP-address to the DHCP relay agent (DHA, DHA1, DHA2) located within said corresponding access device (DSLAMa, DSLAMc);
b) by said DHCP relay agent (DHA, DHA1, DHA2), notifying the requesting customer device (CPE1, CPEa, CPEc) about its newly assigned dynamic IP-address received by the DHCP server (DHS, DHS1, DHS2) associated to the DHCP relay agent (DHA, DHA1, DHA2);
said method being **characterized in that** it further comprises the step of:
c) by one of the DHCP nodes (DHA, DHA1, DHS, DHS2), notifying the bandwidth controller (BWC, BWC1, BWC2) about the assigned dynamic IP-address of the requesting customer device (CPE1, CPEa, CPEc) and about the identifier of the corresponding access device (DSLAMa, DSLAMc) connected to the requesting customer device (CPE1, CPEa, CPEc) together with the access device uplink port.

2. The method according to claim 1, further comprising the step of:
d) by a network management platform (NMP), notifying the bandwidth controller (BWC, BWC1, BWC2) about topology updates of the path between the access devices (DSLAMa, DSLAMb, DSLPAMc, DSLAMd) and the corresponding edge device (ER, ER1, ER2).

3. The method according to any of the preceding claims, further comprising the step of:
e) by the bandwidth controller (BWC, BWC1, BWC2), storing the information received in step c) and/or in step e) in a path table located within its memory.

4. The method according to any of the preceding claims, wherein said requested services are requested by the plurality of customer devices (CPE1, CPEa, CPEc) to their corresponding application server (AS, SS1, SS2).

5. A system having means for performing the steps of the method according to any of the claims 1 to 4.

6. Use of the method according to any of the claims 1 to 4 for admission control of services requested by customer devices (CPE1, CPEa, CPEc) in a network.
